# EUROPÄISCHE PATENTANMELDUNG

(11) **EP 1 615 173 A2**
(43) Veröffentlichungstag der Anmeldung: **11.01.2006**
(21) Anmeldenummer: 05013747.0
(22) Anmeldetag: 25.06.2005
(51) Int. Cl.: G07B 17/00

(54) **Verfahren und Anordnung zum Generieren eines geheimen Sitzungsschlüssels**

(30) Priorität: 01.07.2004 DE 102004032057
(71) Anmelder: Francotyp-Postalia GmbH, 16547 Birkenwerder (DE)
(72) Erfinder: Bleumer, Gerrit, Dr., 16552 Schildow (DE); Heinrich, Clemens, 12161 Berlin (DE)
(74) Vertreter: Cohausz & Florack

(57) **Zusammenfassung**

Verfahren zum Generieren eines geheimen Sitzungsschlüssels für die kryptographische Absicherung eines Kommunikationskanals zwischen einem ersten Kommunikationspartner (2) und einem zweiten Kommunikationspartner (3), bei dem der erste Kommunikationspartner (2) wenigstens einen ersten Schlüsselparameter (6.5) generiert, wenigstens einen von dem zweiten Kommunikationspartner (3) generierten zweiten Schlüsselparameter (7.5) erhält, und den geheimen Sitzungsschlüssel unter Verwendung des ersten Schlüsselparameters (6.5) und des zweiten Schlüsselparameters (7.5) generiert, wobei der erste Kommunikationspartner (2) eine erste Zufallszahl (6.7) generiert, speichert und an den zweiten Kommunikationspartner (3) übermittelt, eine von dem zweiten Kommunikationspartner (3) rückübermittelte erste Zufallszahl (6.7')erhält, die rückübermittelte erste Zufallszahl (6.7') mit der gespeicherten ersten Zufallszahl (6.7) vergleicht und den generierten geheimen Sitzungsschlüssel bei Vorliegen einer vorgebbaren ersten Beziehung zwischen der rückübermittelten ersten Zufallszahl (6.7') und der gespeicherten ersten Zufallszahl (6.7) zur Verwendung freigibt.

## Beschreibung

Die vorliegende Erfindung betrifft ein Verfahren zum Generieren eines geheimen Sitzungsschlüssels für die kryptographische Absicherung eines Kommunikationskanals zwischen einem ersten Kommunikationspartner und einem zweiten Kommunikationspartner. Bei diesem Verfahren generiert der erste Kommunikationspartner wenigstens einen ersten Schlüsselparameter, erhält wenigstens einen von dem zweiten Kommunikationspartner generierten zweiten Schlüsselparameter, und generiert dann den geheimen Sitzungsschlüssel unter Verwendung des ersten Schlüsselparameters und des zweiten Schlüsselparameters. Die vorliegende Erfindung betrifft weiterhin eine Anordnung, die sich insbesondere zur Durchführung dieses Verfahrens eignet.

Bei der Kommunikation zwischen zwei Kommunikationspartnern ist es häufig erforderlich, die ausgetauschten Informationen vor dem Zugriff, insbesondere vor dem Einblick, unbefugter Dritter zu schützen. Dies ist insbesondere bei dem Austausch sicherheitsrelevanter Informationen, beispielsweise abrechnungsrelevanter Informationen, erforderlich, um nicht autorisierten Manipulationen oder Betrugsversuchen vorzubeugen.

Solche sicherheitsrelevanten bzw. abrechnungsrelevanten Informationen werden in einer Vielzahl von Bereichen zwischen unterschiedlichen Kommunikationspartnern ausgetauscht. Bei den unmittelbar an dem Informationsaustausch beteiligten Kommunikationspartnern handelt es sich in der Regel um entsprechend ausgebildete Datenverarbeitungseinrichtungen, die für die Kommunikation entsprechend ausgebildet sind. Aus dem Bereich der Frankiermaschinen ist es beispielsweise bekannt, abrechnungsrelevante Informationen über einen Kommunikationskanal zwischen der Frankiermaschine und einem entfernten Datenzentrum auszutauschen. Beispielsweise kann bei so genannten Prepaid-Systemen über einen solchen Kommunikationskanal Porto in die Frankiermaschine geladen werden. Ebenso können geheime Schlüsselinformationen, die für die Erzeugung des Frankierabdrucks verwendet werden, in die Frankiermaschine geladen werden.

Um die Kommunikation zwischen zwei Datenverarbeitungseinrichtungen vor unbefugtem Zugriff und unbefugter Einsicht abzusichern, erfolgt der Informationsaustausch in der Regel verschlüsselt. Dabei können so genannte symmetrische Verschlüsselungsverfahren (z. B. DES, Triple DES, AES etc.) oder asymmetrische Verschlüsselungsverfahren (z. B. RSA, EIGamal etc.) zur Anwendung kommen. Wegen der geringeren Aufwands für die Verschlüsselung bzw. Entschlüsselung der Informationen werden bei einer Reihe von Anwendungen für die unmittelbare kryptographische Absicherung der Kommunikation jedoch in der Regel symmetrische Verschlüsselungsverfahren bevorzugt.

Diese symmetrischen Verschlüsselungsverfahren setzen voraus, dass beiden Kommunikationspartnern ein Geheimnis, beispielsweise ein geheimer Schlüssel, bekannt ist, das sie für die Verschlüsselung bzw. Entschlüsselung verwenden. Um zu verhindern, dass dieser geheime Schlüssel als Ganzes zwischen den beiden Kommunikationspartnern ausgetauscht werden muss, und damit wieder entsprechender Aufwand für die Absicherung dieses Austauschs betrieben werden muss, sind gattungsgemäße Verfahren zur Schlüsselgenerierung bekannt, bei denen zwischen den Kommunikationspartnern über einen ungesicherten Kommunikationskanal Schlüsselparameter ausgetauscht werden, die dann von dem jeweiligen Kommunikationspartner verwendet werden, um den geheimen Schlüssel zu generieren. Das Verfahren ist in der Regel so ausgelegt, dass es mit üblicherweise verfügbarer Rechenleistung praktisch nicht möglich ist, aus den ausgetauschten Schlüsselparametern auf den geheimen Sitzungsschlüssel zu schließen. Ein bekanntes derartiges Verfahren ist beispielsweise das so genannte Diffie-Hellman Key Agreement, wie es z. B. in der US 4,956,863 beschrieben wird.

Um die Sicherheit des Informationsaustauschs noch weiter zu erhöhen, ist häufig vorgesehen, nach einer bestimmten Zeit, meist aber für jede neue Kommunikationssitzung zwischen den beiden Kommunikationspartnern, einen neuen geheimen Sitzungsschlüssel zu generieren.

Diese gattungsgemäßen Verfahren haben zwar den Vorteil, dass sie die Kommunikation zwischen den beiden Kommunikationspartnern durch Verschlüsselung unter Verwendung wechselnder geheimer Sitzungsschlüssel absichern. Sie weisen jedoch den Nachteil auf, dass sie nach wie vor nicht vor so genannten Replay-Attacken schützen, bei denen einem der beiden Kommunikationspartner von einem Dritten durch Einspielen aufgezeichneter alter Nachrichten zwischen den beiden Kommunikationspartnern vorgespielt wird, der Dritte sei der andere Kommunikationspartner. Hierdurch kann der Dritte zwar nicht unmittelbar Zugriff auf sicherheitsrelevante Daten erlangen, da ihm der geheime Sitzungsschlüssel nach wie vor nicht bekannt ist, er kann jedoch von dem Kommunikationspartner ungesicherte Dienste oder Informationen abrufen, die es ihm ein einer kombinierten Attacke erleichtern, Zugriff auf sicherheitsrelevante Informationen zu erlangen.

Der vorliegenden Erfindung liegt daher die Aufgabe zu Grunde, ein Verfahren bzw. eine Anordnung der eingangs genannten Art zur Verfügung zu stellen, welches bzw. welche die oben genannten Nachteile nicht oder zumindest in geringerem Maße aufweist und insbesondere einen erhöhten Schutz vor Replay-Attacken gewährleistet.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einer Anordnung gemäß dem Oberbegriff des Anspruchs 16 durch die im kennzeichnenden Teil des Anspruchs 16 angegebenen Merkmale.

Der vorliegenden Erfindung liegt die technische Lehre zu Grunde, dass man einen erhöhten Schutz vor Replay-Attacken erzielt, wenn der erste Kommunikationspartner eine erste Zufallszahl generiert, speichert und an den zweiten Kommunikationspartner übermittelt, der erste Kommunikationspartner anschließend eine von dem zweiten Kommunikationspartner rückübermittelte erste Zufallszahl erhält, wobei er dann die rückübermittelte erste Zufallszahl mit der gespeicherten ersten Zufallszahl vergleicht und den generierten geheimen Sitzungsschlüssel bei Vorliegen einer vorgebbaren ersten Beziehung zwischen der rückübermittelten ersten Zufallszahl und der gespeicherten ersten Zufallszahl zur Verwendung freigibt.

Im einfachsten Fall wird überprüft, ob die rückübermittelte erste Zufallszahl gleich der gespeicherten ersten Zufallszahl ist. Es kann jedoch auch ein Protokoll vorgesehen sein, bei dem der zweite Kommunikationspartner die erste Zufallszahl nach einem vorgegebenen Schema modifiziert, bevor er sie an den ersten Kommunikationspartner rückübermittelt.

Durch die erfindungsgemäße Kopplung der Freigabe des geheimen Sitzungsschlüssels an die erste Zufallszahl wird das Einspielen aufgezeichneter alter Nachrichten zwischen den beiden Kommunikationspartnern für den ersten Kommunikationspartner in einfacher Weise erkennbar. Besonders effektiv ist dieser Schutz vor Replay-Attacken bei bevorzugten Varianten der Erfindung, bei denen für jede neue Kommunikationssitzung ein neuer geheimer Sitzungsschlüssel generiert wird.

Wird festgestellt, dass zwischen der rückübermittelten ersten Zufallszahl und der gespeicherten ersten Zufallszahl nicht die vorgegebene erste Beziehung besteht, kann der erste Kommunikationspartner entsprechend reagieren. Beispielsweise kann er eine entsprechende Fehlermeldung ausgeben und - gegebenenfalls nach einem oder mehreren erfolglosen Versuchen, die korrekte Zufallszahl von seinem Kommunikationspartner zu erhalten - die Kommunikation abbrechen.

Vorzugsweise übermittelt der erste Kommunikationspartner den ersten Schlüsselparameter weiterhin an den zweiten Kommunikationspartner, der den geheimen Sitzungsschlüssel dann ebenfalls unter Verwendung des ersten Schlüsselparameters und des zweiten Schlüsselparameters generiert.

Die für den erste Kommunikationspartner beschriebene Kopplung der Freigabe des geheimen Sitzungsschlüssels an eine Zufallszahl findet bevorzugt auf beiden Seiten statt. Vorzugsweise ist daher vorgesehen, dass der zweite Kommunikationspartner eine zweite Zufallszahl generiert, speichert und an den ersten Kommunikationspartner übermittelt. Der zweite Kommunikationspartner erhält dann eine von dem ersten Kommunikationspartner rückübermittelte zweite Zufallszahl, die er mit der gespeicherten zweiten Zufallszahl vergleicht. Bei Vorliegen einer vorgebbaren zweiten Beziehung zwischen der rückübermittelten zweiten Zufallszahl und der gespeicherten zweiten Zufallszahl gibt der zweite Kommunikationspartner den generierten geheimen Sitzungsschlüssel dann zur Verwendung frei.

Die Übermittlung und Überprüfung der ersten Zufallszahl bzw. zweiten Zufallszahl kann getrennt von anderen Kommunikationsschritten im Rahmen der Schlüsselgenerierung erfolgen. Bevorzugt erfolgt jedoch eine Kopplung mit anderen Kommunikationsschritten, insbesondere Kommunikationsschritten bei der Generierung des geheimen Sitzungsschlüssels, um Manipulationen weiter zu erschweren.

Bei bevorzugten Varianten des erfindungsgemäßen Verfahrens generiert der erste Kommunikationspartner daher einen ersten Datensatz und übermittelt diesen an den zweiten Kommunikationspartner. Der erste Datensatz umfasst dabei die erste Zufallszahl und weitere erste Daten.

Bei diesen weiteren ersten Daten kann es sich zum einen um einen ersten Schlüsselgenerierungsdatensatz handeln. Dieser erste Schlüsselgenerierungsdatensatz kann wiederum wenigstens den ersten Schlüsselparameter umfassen, der unmittelbar zur Generierung des geheimen Sitzungsschlüssels an den zweiten Kommunikationspartner übertragen werden muss. Bei einer Schlüsselgenerierung nach dem oben genannten Diffie-Hellman Key Agreement handelt es sich bei dem ersten Schlüsselparameter beispielsweise um den so genannten öffentlichen Wert (public value) des ersten Kommunikationspartners.

Zusätzlich oder alternativ kann der erste Schlüsselgenerierungsdatensatz auch wenigstens einen ersten Schlüsselgenerierungsparameter umfassen. Diese ersten Schlüsselgenerierungsparameter definieren zumindest teilweise das Verfahren, nach dem der geheime Sitzungsschlüssel generiert wird. Bei einer Schlüsselgenerierung nach dem oben genannten Diffie-Hellman Key Agreement handelt es sich bei solchen ersten Schlüsselgenerierungsparametern beispielsweise um die so genannte Basis (base) g und die so genannte Primzahl (prime) p. Gegebenenfalls kann der erste Schlüsselgenerierungsdatensatz sogar den gesamten Schlüsselgenerierungsalgorithmus umfassen.

Zusätzlich oder alternativ können die oben genannten weiteren ersten Daten eine erste Identifikation des ersten Kommunikationspartners umfassen. Hierdurch ist es dem zweiten Kommunikationspartner möglich, den ersten Kommunikationspartner zu identifizieren.

Bevorzugt generiert der erste Kommunikationspartner zunächst eine erste digitale Signatur über wenigstens einen Teil des ersten Datensatzes und dann einen zweiten Datensatz, der wenigstens die erste digitale Signatur umfasst, vorzugsweise wenigstens die erste digitale Signatur und den ersten Datensatz umfasst. Diesen zweiten Datensatz übermittelt er dann an den zweiten Kommunikationspartner. Die erste digitale Signatur ermöglicht es dem zweiten Kommunikationspartner zum einen, die Authentizität der signierten Daten zu überprüfen. Um Manipulationen in diesem Bereich auszuschließen, umfasst der signierte Teil des ersten Datensatzes daher bevorzugt die erste Zufallszahl. Weiter vorzugsweise wird der gesamte erste Datensatz signiert, um maximale Sicherheit zu erlangen.

Zum anderen ermöglicht die erste digitale Signatur dem zweiten Kommunikationspartner die zuverlässige Identifikation des ersten Kommunikationspartners. Besteht beispielsweise eine feste kryptographische Bindung zwischen den beiden Kommunikationspartnern - sind die beiden einander mit anderen Worten bekannt - und hat der zweite Kommunikationspartner somit direkten Zugriff auf die zur Verifikation der ersten digitale Signatur erforderlichen Informationen, kann als erste Identifikation eine einfache Namensbezeichnung oder dergleichen des ersten Kommunikationspartners genügen. Anhand dieser ersten Identifikation kann der zweite Kommunikationspartner die zur Verifikation der ersten digitalen Signatur erforderlichen Informationen identifizieren, darauf zugreifen und die erste digitale Signatur verifizieren. Ist die Verifikation erfolgreich, steht für den zweiten Kommunikationspartner gleichzeitig die Identität des ersten Kommunikationspartners zweifelsfrei fest.

Besteht keine feste kryptographische Bindung zwischen den beiden Kommunikationspartnern - sind die beiden einander mit anderen Worten nicht bekannt - umfasst die erste Identifikation bevorzugt alle notwendigen Informationen, um dem zweiten Kommunikationspartner die Verifikation der ersten digitalen Signatur, beispielsweise in der Hierarchie einer so genannten Public-Key-Infrastruktur anhand abhängiger kryptographischer Zertifikate bis hin zu einem gemeinsamen Ursprung (so genannte root certification authority), zu ermöglichen.

Bevorzugt überprüft der zweite Kommunikationspartner den Inhalt des zweiten Datensatzes nach wenigstens einem vorgegebenen ersten Prüfungskriterium und verfährt in Abhängigkeit von dem Ergebnis der Überprüfung weiter. Das erste Prüfungskriterium kann dabei in dem zweiten Datensatz enthalten sein, um eine variable, an den jeweiligen Anwendungsfall angepasste Prüfung zu ermöglichen. Zusätzlich oder alternativ verifiziert der zweite Kommunikationspartner die erste digitale Signatur und verfährt in Abhängigkeit von dem Ergebnis der Verifizierung weiter.

Bei dem ersten Prüfungskriterium kann es sich beispielsweise um eine oder mehrere Vorgaben hinsichtlich der Länge, des Inhalts und/oder der Formatierung von Teilen des zweiten Datensatzes oder des gesamten zweiten Datensatzes handeln.

Ist das Ergebnis der Überprüfung bzw. Verifizierung negativ, d.h. wird festgestellt, dass das erste Prüfungskriterium nicht erfüllt wird bzw. schlägt die Verifizierung fehl, kann der zweite Kommunikationspartner entsprechend reagieren. Beispielsweise kann er eine entsprechende Fehlermeldung an den ersten Kommunikationspartner ausgeben und - gegebenenfalls nach einem oder mehreren erfolglosen Versuchen, die korrekten Daten von dem ersten Kommunikationspartner zu erhalten - die Kommunikation abbrechen.

Bei bevorzugten Varianten der erfindungsgemäßen Verfahrens wird auf Seiten des jeweils anderen Kommunikationspartners analog verfahren. Vorzugsweise generiert der zweite Kommunikationspartner daher nach Erhalt des ersten Datensatzes einen dritten Datensatz und übermittelt diesen an den ersten Kommunikationspartner. Der dritte Datensatz umfasst dabei bevorzugt die von dem ersten Kommunikationspartner zuletzt erhaltene erste Zufallszahl oder eine nach einen vorgegebenen Schema davon abgeleitete erste Zufallszahl sowie eine zweite Zufallszahl sowie weitere zweite Daten.

Bei diesen weiteren zweiten Daten kann es sich um einen zweiten Schlüsselgenerierungsdatensatz handeln, der insbesondere wenigstens den zweiten Schlüsselparameter umfasst. Der zweite Schlüsselgenerierungsdatensatz ist dabei bevorzugt analog zu dem oben beschriebenen ersten Schlüsselgenerierungsdatensatz aufgebaut. Zusätzlich oder alternativ können die weiteren zweiten Daten eine zweite Identifikation des zweiten Kommunikationspartners umfassen, die es dem ersten Kommunikationspartner ermöglicht, den zweiten Kommunikationspartner analog zu der obigen Beschreibung zu identifizieren.

Weiterhin können die weiteren zweiten Daten zusätzlich oder alternativ wenigstens einen Teil des zweiten Datensatzes umfassen. Hierdurch wird die Sicherheit des Datenaustauschs weiter erhöht, da der erste Kommunikationspartner überprüfen kann, ob der zweite Kommunikationspartner die an ihn übermittelten Daten vollständig erhalten hat.

Analog zu der obigen Beschreibung generiert der zweite Kommunikationspartner bevorzugt zunächst eine zweite digitale Signatur über wenigstens einen Teil des dritten Datensatzes und dann einen vierten Datensatz, den er an den ersten Kommunikationspartner übermittelt. Der vierte Datensatz ist analog zu dem oben beschriebenen zweiten Datensatz aufgebaut und umfasst wenigstens die zweite digitale Signatur, insbesondere umfasst er wenigstens die zweite digitale Signatur und den dritten Datensatz.

Analog zu der oben beschriebenen Verfahrensweise seitens des zweiten Kommunikationspartners überprüft der erste Kommunikationspartner den Inhalt des vierten Datensatzes nach wenigstens einem vorgegebenen zweiten Prüfungskriterium, das insbesondere wiederum in dem vierten Datensatz enthalten sein kann, und verfährt in Abhängigkeit von dem Ergebnis der Überprüfung weiter. Zusätzlich oder alternativ verifiziert der erste Kommunikationspartner in analoger Weise die zweite digitale Signatur und verfährt in Abhängigkeit von dem Ergebnis der Verifizierung weiter. Ist die Prüfung bzw. die Verifikation erfolgreich, wird beispielsweise der geheime Sitzungsschlüssel freigegeben.

Bei vorteilhaften Varianten des erfindungsgemäßen Verfahrens ist vorgesehen, dass der erste Kommunikationspartner nach Erhalt des dritten Datensatzes einen fünften Datensatz generiert und an den zweiten Kommunikationspartner übermittelt. Der fünfte Datensatz umfasst die von dem zweiten Kommunikationspartner zuletzt erhaltene zweite Zufallszahl oder eine nach einem vorgegebenen Schema davon abgeleitete zweite Zufallszahl. Diese ermöglichen auf Seite des zweiten Kommunikationspartners dann die oben beschriebene Prüfung und die Freigabe des geheimen Sitzungsschlüssels.

Der fünfte Datensatz kann weiterhin wiederum eine erste Identifikation des ersten Kommunikationspartners umfassen, um den Ursprung dieser Daten nachvollziehbar zu machen. Zusätzlich oder alternativ kann der fünfte Datensatz wenigstens einen Teil des zweiten Datensatzes und/oder wenigstens einen Teil des vierten Datensatzes umfassen. Dies erhöht die Sicherheit des Datenaustauschs weiter, da der zweite Kommunikationspartner überprüfen kann, ob der erste Kommunikationspartner die an ihn übermittelten Daten vollständig erhalten hat.

Vorzugsweise generiert der erste Kommunikationspartner eine dritte digitale Signatur über wenigstens einen Teil des fünften Datensatzes und einen sechsten Datensatz, den er an den zweiten Kommunikationspartner übermittelt. Der sechste Datensatz umfasst wenigstens die dritte digitale Signatur, insbesondere wenigstens die dritte digitale Signatur und den fünften Datensatz. Er ermöglicht analog zu der oben beschriebenen Verfahrensweise die Authentifizierung der übermittelten Daten und die zuverlässige Identifizierung des ersten Kommunikationspartners.

Analog zu der oben beschriebenen Verfahrensweise überprüft der zweite Kommunikationspartner den Inhalt des sechsten Datensatzes nach wenigstens einem vorgegebenen dritten Prüfungskriterium, wobei das dritte Prüfungskriterium wiederum in dem sechsten Datensatz enthalten sein kann, und verfährt in Abhängigkeit von dem Ergebnis der Überprüfung weiter. Zusätzlich oder alternativ verifiziert der zweite Kommunikationspartner die dritte digitale Signatur und verfährt in Abhängigkeit von dem Ergebnis der Verifizierung weiter.

Die vorliegende Erfindung betrifft weiterhin ein Verfahren zur sicheren Kommunikation, bei dem in einem ersten Kommunikationsschritt ein geheimer Sitzungsschlüssel mit dem oben beschriebenen erfindungsgemäßen Verfahren generiert wird und in einem dem ersten Kommunikationsschritt nachfolgenden zweiten Kommunikationsschritt eine Kommunikationssitzung zwischen dem ersten Kommunikationspartner und dem zweiten Kommunikationspartner unter Verwendung des geheimen Sitzungsschlüssels kryptographisch abgesichert wird.

Die kryptographische Absicherung ist unabhängig von dem gewählten Verfahren zur Generierung des geheimen Sitzungsschlüssels. Mit dem geheimen Sitzungsschlüssel besitzen beide Kommunikationspartner ein geteiltes Geheimnis, welches sie zur Absicherung ihrer Kommunikation nach beliebigen Verfahren nutzen können. Dabei kann die Absicherung je nach Sicherheitsrelevanz bzw. Vertraulichkeit der ausgetauschten Informationen unterschiedlich ausfallen.

Ist lediglich sicherzustellen, dass Manipulationen Dritter an den ausgetauschten Informationen nicht unerkannt bleiben, genügt eine geeignete Authentifizierung der ausgetauschten Informationen unter Verwendung des geteilten Geheimnisses. Für eine solche Authentifizierung kommen beispielsweise so genannte Message Authentication Codes (z.B. MACs oder HMACs) in Betracht, die auf Basis der ausgetauschten Informationen unter Verwendung des geteilten Geheimnisses generiert und den ausgetauschten Informationen beigefügt werden. Sollen die ausgetauschten Informationen hingegen für Dritte nicht einsehbar sein, kommen zur kryptographischen Absicherung der ausgetauschten Informationen Verschlüsselungsverfahren in Betracht, bei denen die auszutauschenden Informationen unter Verwendung des geteilten Geheimnisses in einen ohne Kenntnis des geteilten Geheimnis nicht interpretierbaren Code transformiert werden. Bekannte Verfahren sind hier beispielsweise symmetrische Algorithmen wie DES, Triple DES oder AES etc.

Die vorliegende Erfindung betrifft weiterhin eine Anordnung zum Generieren eines geheimen Sitzungsschlüssels für die kryptographische Absicherung eines Kommunikationskanals zwischen einer ersten Datenverarbeitungseinrichtung und einer zweiten Datenverarbeitungseinrichtung. Die Anordnung weist eine erste Datenverarbeitungseinrichtung auf, die wiederum eine erste Verarbeitungseinheit aufweist, die zum Generieren wenigstens eines ersten Schlüsselparameters ausgebildet ist. Weiterhin weist sie eine mit der ersten Verarbeitungseinheit verbundene erste Kommunikationseinheit auf, die zum Empfangen wenigstens eines von dem zweiten Kommunikationspartner generierten zweiten Schlüsselparameters ausgebildet ist, wobei die erste Verarbeitungseinheit zum Generieren des geheimen Sitzungsschlüssels unter Verwendung des ersten Schlüsselparameters und des zweiten Schlüsselparameters ausgebildet ist. Erfindungsgemäß ist die erste Verarbeitungseinheit zum Generieren einer ersten Zufallszahl ausgebildet. Die erste Datenverarbeitungseinrichtung weist weiterhin einen mit der ersten Verarbeitungseinheit verbundenen ersten Speicher zum Speichern der ersten Zufallszahl auf. Weiterhin ist die erste Verarbeitungseinheit zum Übermitteln der ersten Zufallszahl an die zweite Datenverarbeitungseinrichtung über die erste Kommunikationseinheit ausgebildet. Weiterhin ist die erste Verarbeitungseinheit zum Empfangen einer von der zweiten Datenverarbeitungseinrichtung rückübermittelten ersten Zufallszahl über die erste Kommunikationseinheit ausgebildet. Schließlich ist die erste Verarbeitungseinheit zum Vergleichen der rückübermittelten ersten Zufallszahl mit der in dem ersten Speicher gespeicherten ersten Zufallszahl und zur Freigabe der Verwendung des geheimen Sitzungsschlüssels bei Vorliegen einer vorgebbaren ersten Beziehung zwischen der rückübermittelten ersten Zufallszahl und der gespeicherten ersten Zufallszahl ausgebildet.

Die erfindungsgemäße Anordnung eignet sich zur Durchführung des oben beschriebenen erfindungsgemäßen Verfahrens. Mit ihr lassen sich die oben beschriebenen Vorteile und Varianten in derselben Weise realisieren, sodass diesbezüglich auf die obigen Ausführungen Bezug genommen wird.

Bevorzugt umfasst die erfindungsgemäße Anordnung eine zweite Datenverarbeitungseinrichtung, die eine zweite Verarbeitungseinheit und eine mit der zweiten Verarbeitungseinheit verbundene zweite Kommunikationseinheit aufweist, wobei die zweite Verarbeitungseinheit zum Generieren des zweiten Schlüsselparameters ausgebildet ist. Die erste Datenverarbeitungseinrichtung ist dann zum Übermitteln des ersten Schlüsselparameters über die zweite Kommunikationseinheit an die zweite Verarbeitungseinheit ausgebildet. Die zweite Verarbeitungseinheit ist dann zum Generieren des geheimen Sitzungsschlüssels unter Verwendung des ersten Schlüsselparameters und des zweiten Schlüsselparameters ausgebildet.

Vorzugsweise ist die zweite Verarbeitungseinheit zum Generieren einer zweiten Zufallszahl ausgebildet. Die zweite Datenverarbeitungseinrichtung weist dann einen mit der zweiten Verarbeitungseinheit verbundenen zweiten Speicher zum Speichern der zweiten Zufallszahl auf. Die zweite Verarbeitungseinheit ist weiterhin zum Übermitteln der zweiten Zufallszahl an die erste Datenverarbeitungseinrichtung über die zweite Kommunikationseinheit ausgebildet. Die zweite Verarbeitungseinheit ist zudem zum Empfangen einer von der ersten Datenverarbeitungseinrichtung über die zweite Kommunikationseinheit rückübermittelten zweiten Zufallszahl ausgebildet. Schließlich ist die zweite Verarbeitungseinheit zum Vergleichen der rückübermittelten zweiten Zufallszahl mit der in dem zweiten Speicher gespeicherten zweiten Zufallszahl und zur Freigabe der Verwendung des geheimen Sitzungsschlüssels bei Vorliegen einer vorgebbaren zweiten Beziehung zwischen der rückübermittelten zweiten Zufallszahl und der gespeicherten zweiten Zufallszahl ausgebildet.

Bevorzugt ist die erste Verarbeitungseinheit zum Verschlüsseln von Nachrichten an die zweite Datenverarbeitungseinrichtung unter Verwendung des freigegebenen geheimen Sitzungsschlüssels ausgebildet. Weiter vorzugsweise weist die zweite Datenverarbeitungseinrichtung eine erste Verarbeitungseinheit auf, die zum Verschlüsseln von Nachrichten an die zweite Datenverarbeitungseinrichtung unter Verwendung des freigegebenen geheimen Sitzungsschlüssels ausgebildet ist.

Die vorliegende Erfindung lässt sich in beliebigen Bereichen einsetzen, in denen zwischen zwei Kommunikationspartnern Informationen abgesichert ausgetauscht werden müssen. Besonders vorteilhaft lässt sie sich im Bereich der Frankiermaschinen einsetzen. Bevorzugt ist daher die erste Datenverarbeitungseinrichtung als Frankiermaschine ausgebildet, wobei die zweite Datenverarbeitungseinrichtung dann insbesondere als entfernt von der ersten Datenverarbeitungseinrichtung angeordnete Datenzentrale ausgebildet ist. Alternativ ist die zweite Datenverarbeitungseinrichtung als Frankiermaschine ausgebildet, wobei die erste Datenverarbeitungseinrichtung dann insbesondere als entfernt von der zweiten Datenverarbeitungseinrichtung angeordnete Datenzentrale ausgebildet ist.

Die vorliegende Erfindung betrifft weiterhin eine Datenverarbeitungseinrichtung, die als erste Datenverarbeitungseinrichtung oder als zweite Datenverarbeitungseinrichtung für eine erfindungsgemäße Anordnung ausgebildet ist.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen
- Figur 1: eine schematische Darstellung einer bevorzugten Ausführungsform der erfindungsgemäßen Anordnung zur Durchführung einer bevorzugten Ausführungsform des erfindungsgemäßen Verfahrens zum Generieren eines geheimen Sitzungsschlüssels und des erfindungsgemäßen Verfahrens zur sicheren Kommunikation;
- Figur 2A: den ersten Teil eines Ablaufdiagramms einer bevorzugten Ausführungsform des erfindungsgemäßen Verfahrens zur sicheren Kommunikation, das mit der Anordnung aus Figur 1 durchgeführt wird;
- Figur 2B: den zweiten Teil zu dem Ablaufdiagramm aus Figur 2A;
- Figur 3: eine schematische Darstellung einer ersten Nachricht, die im Verfahrensablauf nach den Figuren 2A und 2B generiert wird;
- Figur 4: eine schematische Darstellung einer zweiten Nachricht, die im Verfahrensablauf nach den Figuren 2A und 2B generiert wird;
- Figur 5: eine schematische Darstellung einer dritten Nachricht, die im Verfahrensablauf nach den Figuren 2A und 2B generiert wird.

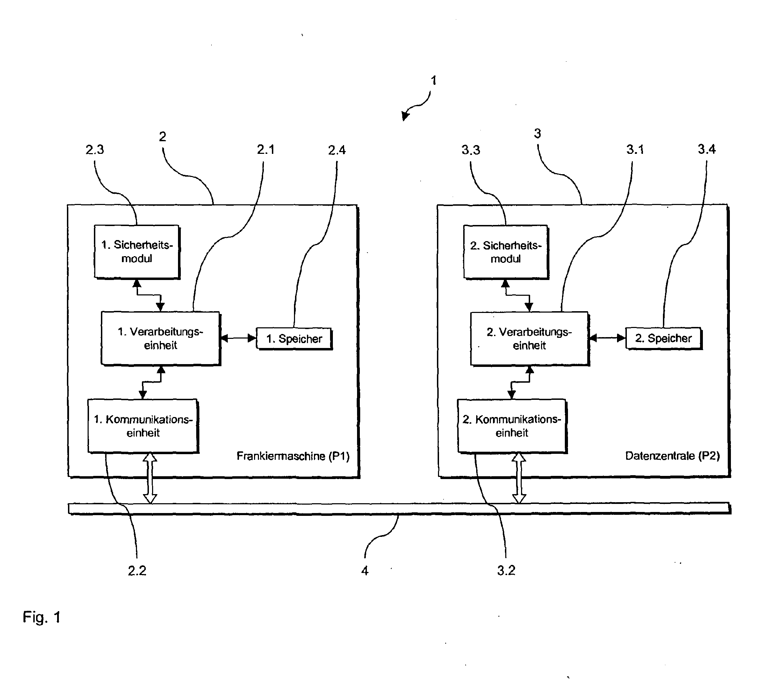

Figur 1 zeigt eine schematische Darstellung einer bevorzugten Ausführungsform der erfindungsgemäßen Anordnung 1 zur Durchführung des erfindungsgemäßen Verfahrens zum Generieren eines geheimen Sitzungsschlüssels und des erfindungsgemäßen Verfahrens zur sicheren Kommunikation zwischen einem ersten Kommunikationspartner in Form einer ersten Datenverarbeitungseinrichtung 2 und einem zweiten Kommunikationspartner in Form einer zweiten Datenverarbeitungseinrichtung 3.

Bei der ersten Datenverarbeitungseinrichtung handelt es sich um eine Frankiermaschine 2, während es sich bei der zweiten Datenverarbeitungseinrichtung um eine von der Frankiermaschine 2 entfernt angeordnete Datenzentrale 3 handelt.

Die Frankiermaschine 2 weist eine erste Verarbeitungseinheit 2.1 und eine damit verbundene erste Kommunikationseinheit 2.2 in Form eines Modems auf. Weiterhin weist die Frankiermaschine 2 ein mit der ersten Verarbeitungseinheit 2.1 verbundenes erstes Sicherheitsmodul und einen mit der ersten Verarbeitungseinheit 2.1 verbundenen ersten Speicher 2.4 auf.

Die Datenzentrale 3 weist eine zweite Verarbeitungseinheit 3.1 und eine damit verbundene zweite Kommunikationseinheit 3.2 in Form einer Modembank auf. Weiterhin weist die Datenzentrale 3 ein mit der zweiten Verarbeitungseinheit 3.1 verbundenes zweites Sicherheitsmodul und einen mit der zweiten Verarbeitungseinheit 3.1 verbundenen zweiten Speicher 3.4 auf.

Die Frankiermaschine 2 kann über ein Kommunikationsnetz 4 bestimmte Dienste, wie beispielsweise das Nachladen von Porto etc., von der Datenzentrale 3 anfordern bzw. abrufen. Hierzu baut sie über ihre erste Kommunikationseinheit 2.2, das Kommunikationsnetz 4 und die zweite Kommunikationseinheit 3.2 der Datenzentrale 3 einen zunächst ungesicherten Kommunikationskanal mit der Datenzentrale 3 auf. Es versteht sich, dass über das Kommunikationsnetz 4 noch weitere - in Figur 1 nicht dargestellte - Frankiermaschinen mit der Datenzentrale 3 verbunden werden können, deren Aufbau und Funktionsweise demjenigen bzw. derjenigen der Frankiermaschine 2 entspricht.

Im Rahmen eines oder mehrerer der genannten Dienste können zwischen der Frankiermaschine 2 und der Datenzentrale 3 Informationen ausgetauscht werden, die aufgrund ihrer Sicherheitsrelevanz bzw. ihrer Vertraulichkeit vor unbefugtem Zugriff Dritter geschützt werden müssen. Um dies zu erreichen wird die Kommunikation bzw. der Kommunikationskanal zwischen der Frankiermaschine 2 und der Datenzentrale 3 zumindest beim Austausch kritischer Informationen durch kryptographische Mittel abgesichert.

Im Folgenden wird unter Bezugnahme auf die Figuren 1 bis 5 der Ablauf einer bevorzugten Ausführungsform des erfindungsgemäßen Verfahrens zur sicheren Kommunikation zwischen der Frankiermaschine 2 und der Datenzentrale 3 beschrieben, welches eine bevorzugte Ausführungsform des erfindungsgemäßen Verfahrens zum Generieren eines geheimen Sitzungsschlüssels umfasst.

Zunächst wird der Verfahrensablauf in einem Schritt 5.1 gestartet. In einem Schritt 5.2 überprüft die erste Verarbeitungseinheit 2.1, ob eine neue Kommunikation mit der Datenzentrale 3 aufgebaut werden soll.

Ist dies der Fall, wird in einem ersten Kommunikationsschritt 5.3 ein der Frankiermaschine 2 und der Datenzentrale 3 gemeinsames Geheimnis in Form eines geheimen Sitzungsschlüssels SK etabliert, welcher dann in einem nachfolgenden zweiten Kommunikationsschritt 5.4 verwendet wird, um den Kommunikationskanal, also die Kommunikation, zwischen der Frankiermaschine 2 und der Datenzentrale 3 kryptographisch abzusichern.

Im vorliegenden Beispiel erfolgt die Etablierung bzw. Generierung des geheimen Sitzungsschlüssels SK nach dem oben genannten Diffie-Hellman Key Agreement. Dieses Diffie-Hellman Key Agreement ist hinlänglich bekannt und standardisiert, sodass hierauf nicht näher eingegangen werden soll. Die hierfür erforderlichen Algorithmen und Parameter sind zumindest teilweise in dem ersten Sicherheitsmodul 2.3 bzw. dem zweiten Sicherheitsmodul 3.3 abgelegt. Es versteht sich jedoch, dass bei anderen Varianten des erfindungsgemäßen Verfahrens auch andere Verfahren zur Etablierung eines gemeinsamen Geheimnisses Anwendung finden können.

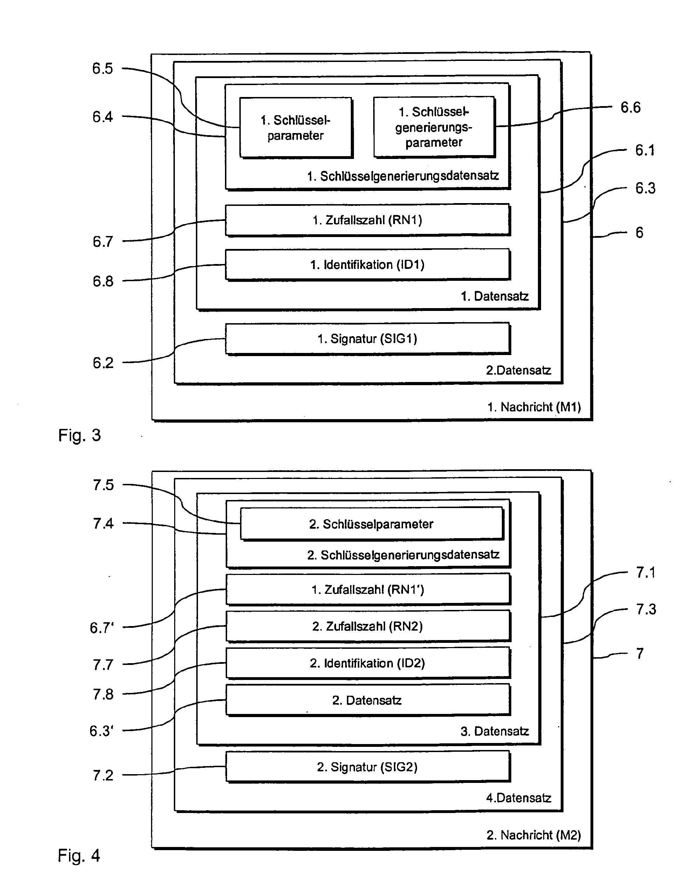

Zur Generierung des geheimen Sitzungsschlüssels SK generiert die Frankiermaschine 2 als erster Kommunikationspartner P1 zunächst eine erste Nachricht 6 (M1), wie sie in Figur 3 schematisch dargestellt ist. Diese erste Nachricht 6 umfasst einen von der ersten Verarbeitungseinheit 2.1 generierten ersten Datensatz 6.1 und eine erste digitale Signatur 6.2 (SIG1), die von der ersten Verarbeitungseinheit 2.1 in einem zweiten Datensatz 6.3 zusammengefasst werden.

Der erste Datensatz 6.1 umfasst dabei einen ersten Schlüsselgenerierungsdatensatz 6.4. Dieser erste Schlüsselgenerierungsdatensatz 6.4 umfasst wiederum einen ersten Schlüsselparameter 6.5 und erste Schlüsselgenerierungsparameter 6.6.

Bei dem ersten Schlüsselparameter 6.5 handelt es sich um einem Parameter, zur Generierung des geheimen Sitzungsschlüssels SK an die Datenzentrale 3 übertragen werden muss. Im vorliegenden Beispiel mit der Generierung des geheimen Sitzungsschlüssels SK nach dem Diffie-Hellman Key Agreement handelt es sich bei dem ersten Schlüsselparameter 6.5 demgemäß um den so genannten öffentlichen Wert (public value) der Frankiermaschine 2, den die erste Verarbeitungseinheit 2.1 unter Zugriff auf das erste Sicherheitsmodul 2.3 gemäß dem Diffie-Hellman Key Agreement generiert hat.

Die ersten Schlüsselgenerierungsparameter 6.6 definieren das Verfahren, nach dem der geheime Sitzungsschlüssel SK generiert wird. Bei einer vorliegenden Schlüsselgenerierung nach dem Diffie-Hellman Key Agreement handelt es sich bei den ersten Schlüsselgenerierungsparametern 6.6 um die so genannte Basis (base) g und die so genannte Primzahl (prime) p. Diese können gegebenenfalls von Zeit zu Zeit verändert werden, um die Sicherheit zu erhöhen.

Es versteht sich jedoch, dass die ersten Schlüsselgenerierungsparameter bei anderen Varianten des erfindungsgemäßen Verfahrens beiden Kommunikationspartnern schon vorab bekannt sein können. Eine Einbeziehung der ersten Schlüsselgenerierungsparameter in den ersten Datensatz erübrigt sich dann. Ebenso versteht es sich aber, dass in den Schlüsselgenerierungsdatensatz gegebenenfalls sogar den gesamten Schlüsselgenerierungsalgorithmus umfassen kann. Dies kann insbesondere dann von Vorteil sein, wenn ein erstmaliger Kontakt zwischen beiden Kommunikationspartner stattfindet und nicht davon ausgegangen werden kann, dass der zweite Kommunikationspartner im Besitz der erforderlichen Algorithmen ist.

Der erste Datensatz 6.1 umfasst weiterhin eine erste Zufallszahl 6.7 (RN1), die von der ersten Verarbeitungseinheit 2.1 in dem Schritt 5.5 generiert wurde und in dem ersten Speicher 2.4 gespeichert wurde. Weiterhin umfasst der erste Datensatz 6.1 eine erste Identifikation 6.8 (ID1), die der Frankiermaschine 2 zugeordnet ist. Im vorliegenden Fall handelt es sich um die Seriennummer der Frankiermaschine 2, anhand derer die Frankiermaschine 2 eindeutig identifiziert werden kann.

In dem Schritt 5.5 erstellt die erste Verarbeitungseinheit 2.1 unter Zugriff auf das erste Sicherheitsmodul 2.3 über dem ersten Datensatz 6.1 eine erste digitale Signatur 6.2 (SIG1) nach einem bekannten Signaturalgorithmus, beispielweise RSA, DSA, EIGamal, ECDSA etc. Es versteht sich jedoch, dass bei anderen Varianten des erfindungsgemäßen Verfahrens auch nur über einen Teil des ersten Datensatzes die erste digitale Signatur (SIG1) erstellt werden kann.

Um die erste digitale Signatur 6.2 (SIG1) zu erzeugen, greift die erste Verarbeitungseinheit 2.1 auf einen in dem ersten Sicherheitsmodul 2.3 gespeicherten geheimen, nur der Frankiermaschine 2 bekannten ersten Signaturschlüssel zu. Dieser erste Signaturschlüssel ist Teil eines ersten Schlüsselpaares, das weiterhin eine so genannten öffentlichen ersten Verifizierungsschlüssel umfasst. Dieser erste Verifizierungsschlüssel ist der Datenzentrale 3 bekannt und in deren zweiten Sicherheitsmodul 3.3 gespeichert. Gleichermaßen existiert für die Datenzentrale 3 ein zweites Schlüsselpaar mit einem geheimen zweiten Signaturschlüssel und einem öffentlichen zweiten Verifizierungsschlüssel. Der zweiten Signaturschlüssel ist nur der Datenzentrale 3 bekannt, während der zweite Verifizierungsschlüssel auch der Frankiermaschine 2 bekannt ist. Es besteht somit eine feste kryptographische Bindung zwischen den beiden Kommunikationspartnern Frankiermaschine 2 und Datenzentrale 3. Sie sind einander mit anderen Worten bekannt.

Die erste Verarbeitungseinheit 2.1 generiert im Schritt 5.5 aus dem ersten Datensatz 6.1 und der ersten digitalen Signatur 6.2 den zweiten Datensatz 6.3. Dieser wird in die erste Nachricht 6 (M1) eingebracht, die in einem Schritt 5.6 über das Kommunikationsnetz 4 an die Datenzentrale 3 als zweiten Kommunikationspartner P2 übermittelt wird.

In einem Schritt 5.7 überprüft die Datenzentrale 3 den Inhalt der ersten Nachricht 6 (M1), insbesondere den Inhalt des zweiten Datensatzes 6.3, nach wenigstens einem vorgegebenen ersten Prüfungskriterium, das im vorliegenden Beispiel in dem Schlüsselgenerierungsdatensatz 6.4 enthalten ist.

Die Übermittlung des ersten Prüfungskriteriums ermöglicht eine variable, an den jeweiligen Anwendungsfall angepasste Prüfung. Es versteht sich jedoch, dass das erste Prüfungskriterium bei anderen Varianten des erfindungsgemäßen Verfahrens bereits vorab vereinbart bzw. bekannt sein kann oder an anderer Stelle in der ersten Nachricht (M1) enthalten sein kann.

Bei dem ersten Prüfungskriterium kann es sich beispielsweise um eine oder mehrere Vorgaben hinsichtlich der Länge, des Inhalts und/oder der Formatierung von Teilen des zweiten Datensatzes 6.3, beispielsweise des ersten Datensatzes 6.1, oder des gesamten zweiten Datensatzes 6.3 handeln.

Zusätzlich zu der Überprüfung verifiziert die Datenzentrale 3 in dem Schritt 5.7 die erste digitale Signatur 6.2. Hierzu identifiziert die zweite Verarbeitungseinheit 3.1 anhand der mit der ersten Nachricht 6 (M1) übermittelten ersten Identifikation 6.8 (ID1) den zugehörigen ersten Verifizierungsschlüssel und greift auf den in dem zweiten Sicherheitsmodul 3.3 gespeicherten entsprechenden ersten Verifizierungsschlüssel zu. Wegen der oben geschilderten bestehenden festen kryptographischen Bindung zwischen der Frankiermaschine 2 und der Datenzentrale 3 genügt hierfür die einfache Seriennummer der Frankiermaschine 2 als erste Identifikation (ID1).

Ist die Verifikation erfolgreich, steht für die Datenzentrale 3 als zweiten Kommunikationspartner (P2) neben der Authentizität des signierten ersten Datensatzes 6.1 gleichzeitig zweifelsfrei die Identität der Frankiermaschine 2 als erstem Kommunikationspartner (P1) fest.

Es versteht sich jedoch, dass bei anderen Varianten des erfindungsgemäßen Verfahrens auch keine derartige feste kryptographische Bindung zwischen den beiden Kommunikationspartnern bestehen kann. In diesem Fall umfasst die erste Identifikation (ID1) dann bevorzugt alle notwendigen Informationen, um dem zweiten Kommunikationspartner die Verifikation der ersten digitalen Signatur zu ermöglichen. Dies kann beispielsweise in der Hierarchie einer so genannten Public-Key-Infrastruktur anhand eines oder mehrerer abhängiger kryptographischer Zertifikate bis hin zu einem gemeinsamen Ursprung (so genannte root certification authority) erfolgen, die in der ersten Identifikation (ID1) enthalten sind.

In einem Schritt 5.8 wird nunmehr überprüft, ob das Ergebnis der Überprüfung bzw. Verifizierung in Schritt 5.7 positiv war, d.h. ob das ersten Prüfungskriterium erfüllt wurde bzw. die Verifizierung erfolgreich abgeschlossen wurde.

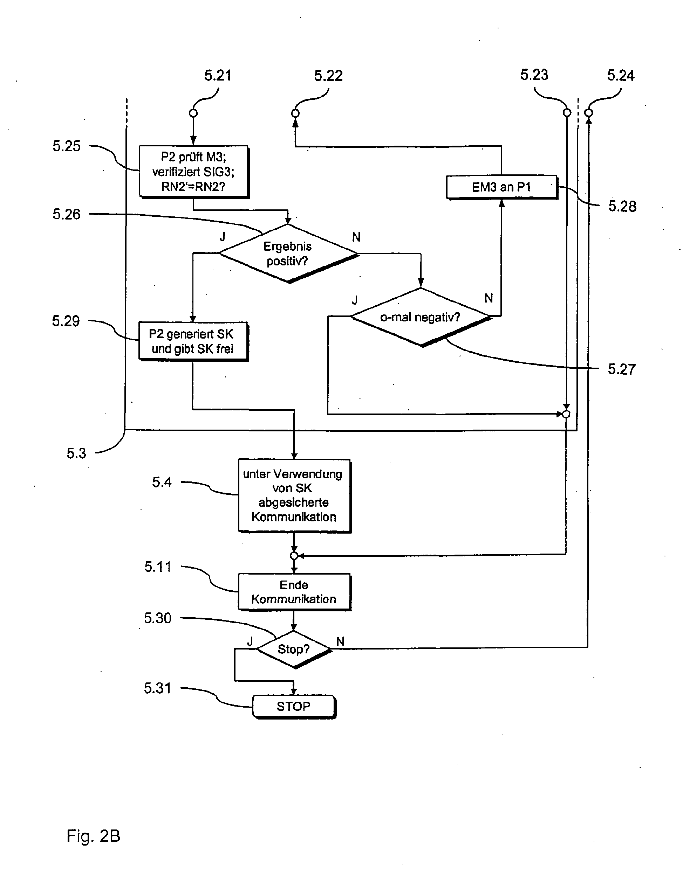

Ist das Ergebnis der Überprüfung und/oder der Verifizierung negativ, d.h. wird festgestellt, dass das erste Prüfungskriterium nicht erfüllt wird bzw. die Verifizierung fehlgeschlagen ist, reagiert die Datenzentrale 3 entsprechend. Zunächst wird in einem Schritt 5.9 überprüft, ob bereits eine vorgebbare Zahl von m negativen Ergebnissen in Folge vorliegt. Ist dies nicht der Fall, wird in einem Schritt 5.10 eine entsprechende erste Fehlermeldung (EM1) an die Frankiermaschine 2 übermittelt und es wird zurück zu Schritt 5.5 gesprungen. Liegen jedoch bereits m negative Ergebnisse in Folge vor, wird zum Schritt 5.11 (siehe Figur 2B) gesprungen und die Datenzentrale 3 bricht die Kommunikation mit der Frankiermaschine 2 ab.

Ist das Ergebnis der Überprüfung und der Verifizierung in Schritt 5.7 positiv, d.h. wird festgestellt, dass das erste Prüfungskriterium erfüllt wird bzw. die Verifizierung erfolgreich war, generiert die Datenzentrale 3 in einem Schritt 5.12 eine zweite Nachricht 7 (M2), wie sie in Figur 4 schematisch dargestellt ist. Diese zweite Nachricht 7 umfasst einen von der zweiten Verarbeitungseinheit 3.1 generierten dritten Datensatz 7.1 und eine zweite digitale Signatur 7.2 (SIG2), die von der zweiten Verarbeitungseinheit 3.1 in einem vierten Datensatz 7.3 zusammengefasst werden.

Der dritte Datensatz 7.1 umfasst einen zweiten Schlüsselgenerierungsdatensatz 7.4. Dieser zweite Schlüsselgenerierungsdatensatz 7.4 umfasst nur einen zweiten Schlüsselparameter 7.5, da die Schlüsselgenerierungsparameter 6.6 zuvor schon seitens der Frankiermaschine 2 festgelegt wurden. Es versteht sich jedoch, dass die Schlüsselgenerierungsparameter bei anderen Varianten des erfindungsgemäßen Verfahrens auch von der Datenzentrale 3 festgelegt werden können oder anderweitig, beispielsweise herstellerseitig, vorgegeben werden.

Der zweite Schlüsselparameter 7.5 muss unmittelbar zur Generierung des geheimen Sitzungsschlüssels SK an die Frankiermaschine 2 übertragen werden. Im vorliegenden Beispiel mit Generierung des geheimen Sitzungsschlüssels SK nach dem Diffie-Hellman Key Agreement handelt es sich bei dem zweiten Schlüsselparameter 7.5 um den so genannten öffentlichen Wert (public value) der Datenzentrale 3, den die zweite Verarbeitungseinheit 3.1 unter Zugriff auf das zweite Sicherheitsmodul 3.3 gemäß dem Diffie-Hellman Key Agreement generiert hat.

Der dritte Datensatz 7.1 umfasst weiterhin die zuletzt mit der ersten Nachricht 6 (M1) übermittelte erste Zufallszahl 6.7' (RN1'). Diese wird unverändert in den dritten Datensatz 7.1 übernommen. Sie kann jedoch bei anderen Varianten der Erfindung auch nach einem vorgegebenen Schema modifiziert werden.

Der dritte Datensatz 7.1 umfasst weiterhin eine zweite Zufallszahl 7.7 (RN2), die von der zweiten Verarbeitungseinheit 3.1 in dem Schritt 512 generiert und in dem zweiten Speicher 3.4 gespeichert wurde. Weiterhin umfasst der dritte Datensatz 7.1 eine zweite Identifikation 7.8 (ID2), die Datenzentrale 3 zugeordnet ist und anhand derer die Datenzentrale 3 eindeutig identifiziert werden kann. Schließlich umfasst der dritte Datensatz 7.1 nochmals den zweiten Datensatz 6.3', der unverändert übernommen wird, oder zumindest einen Teil des zweiten Datensatzes 6.3'.

In dem Schritt 5.12 erstellt die zweite Verarbeitungseinheit 3.1 unter Zugriff auf das zweite Sicherheitsmodul 3.3 über dem dritten Datensatz 7.1 eine zweite digitale Signatur 7.2 (SIG2) nach einem bekannten Signaturalgorithmus, beispielweise RSA, DSA, EIGamal, ECDSA etc. Vorzugsweise handelt es sich dabei um denselben Algorithmus, der für die Erstellung der ersten digitalen Signatur 6.2 (SIG1) verwendet wurde. Auch hier versteht es sich, dass bei anderen Varianten des erfindungsgemäßen Verfahrens auch nur über einen Teil des dritten Datensatzes die zweite digitale Signatur (SIG2) erstellt werden kann. Um die zweite digitale Signatur 7.2 (SIG2) zu erzeugen, greift die zweite Verarbeitungseinheit 3.1 auf den in dem zweiten Sicherheitsmodul 3.3 gespeicherten zweiten Signaturschlüssel zu.

Die zweite Verarbeitungseinheit 3.1 generiert im Schritt 5.12 aus dem dritten Datensatz 7.1 und der zweiten digitalen Signatur 7.2 (SIG2) den zweiten Datensatz 7.3. Dieser wird in die zweite Nachricht 7 (M2) eingebracht, die in einem Schritt 5.13 über das Kommunikationsnetz 4 an die Frankiermaschine 2 (P1) übermittelt wird.

In einem Schritt 5.14 überprüft Frankiermaschine 2 den Inhalt der zweiten Nachricht 7 (M2), insbesondere den Inhalt des zweiten Datensatzes 7.3, nach wenigstens einem vorgegebenen zweiten Prüfungskriterium, das vorzugsweise dem ersten Prüfungskriterium entspricht.

Zusätzlich zu der Überprüfung verifiziert die Frankiermaschine 2 in dem Schritt 5.14 die zweite digitale Signatur 7.2 (SIG2). Hierzu identifiziert die erste Verarbeitungseinheit 2.1 anhand der mit der zweiten Nachricht 7 (M2) übermittelten zweiten Identifikation 7.8 (ID2) den zugehörigen zweiten Verifizierungsschlüssel und greift auf den in dem ersten Sicherheitsmodul 2.3 gespeicherten entsprechenden zweiten Verifizierungsschlüssel zu.

Es versteht sich, dass bei anderen Varianten der Erfindung ohne feste kryptographische Bindung zwischen den Kommunikationspartnern die zweite Identifikation auch hier wieder alle Informationen, beispielsweise Zertifikate etc., enthält, die erforderlich sind, um eine Verifizierung der zweiten digitale Signatur (SIG2) zu ermöglichen.

Ist die Verifikation erfolgreich, steht für die Frankiermaschine 2 als ersten Kommunikationspartner (P1) neben der Authentizität des signierten zweiten Datensatzes 7.3 gleichzeitig zweifelsfrei die Identität der Datenzentrale 3 als zweitem Kommunikationspartner (P2) fest.

Anhand des rückübermittelten zweiten Datensatzes 6.3' kann die Frankiermaschine 2 zudem überprüfen, ob die Datenzentrale 3 alle zuvor in dem Schritt 5.6 übersandten Daten fehlerfrei erhalten hat.

Schließlich wird in dem Schritt 5.14 überprüft, ob die rückübermittelte erste Zufallszahl 6.7' (RN1') gleich der in dem ersten Speicher gespeicherten ersten Zufallszahl 6.7 (RN1) ist. Ist dies der Fall, kann in einfacher Weise ausgeschlossen werden, dass eine Replay-Attacke durch Einspielen einer aufgezeichneten alten zweiten Nachricht vorliegt. Die zweite Signatur 7.2 (SIG2), die unter anderem über der rückübermittelten ersten Zufallszahl 6.7' (RN1') erstellt wurde, gewährleistet dabei die Authentizität der rückübermittelten ersten Zufallszahl 6.7' (RN1'). Unerkannten Manipulationen durch einfaches Einsetzen einer aktuell abgefangenen ersten Zufallszahl 6.7 in eine aufgezeichnete alte zweite Nachricht ist damit vorgebeugt.

In einem Schritt 5.15 wird überprüft, ob das jeweilige Ergebnis der Überprüfung bzw. Verifizierung in Schritt 5.14 positiv war, d.h. ob das zweite Prüfungskriterium erfüllt wurde, die Verifizierung erfolgreich abgeschlossen wurde bzw. die rückübermittelte erste Zufallszahl 6.7' (RN1') gleich der gespeicherten ersten Zufallszahl 6.7 (RN1) ist.

Ist das Ergebnis einer der Überprüfungen und/oder der Verifizierung negativ, d.h. wird festgestellt, dass das zweite Prüfungskriterium nicht erfüllt wird und/oder die Verifizierung fehlgeschlagen ist und/oder die rückübermittelte erste Zufallszahl 6.7' (RN1') ungleich der gespeicherten ersten Zufallszahl 6.7 (RN1) ist, reagiert die Frankiermaschine 2 entsprechend.

Zunächst wird in einem Schritt 5.16 überprüft, ob bereits eine vorgebbare Zahl von n negativen Ergebnissen in Folge vorliegt. Ist dies nicht der Fall, wird in einem Schritt 5.17 eine entsprechende zweite Fehlermeldung (EM2) an die Datenzentrale 3 übermittelt und es wird zurück zu Schritt 5.12 gesprungen. Liegen jedoch bereits n negative Ergebnisse in Folge vor, wird zum Schritt 5.11 gesprungen und die Frankiermaschine 2 bricht die Kommunikation mit der Datenzentrale 3 ab.

Ist das Ergebnis der Überprüfungen und der Verifizierung in Schritt 5.14 positiv, d.h. wird festgestellt, dass das zweite Prüfungskriterium erfüllt wird, die Verifizierung erfolgreich war und die rückübermittelte erste Zufallszahl 6.7' (RN1') gleich der gespeicherten ersten Zufallszahl 6.7 (RN1) ist, generiert die erste Verarbeitungseinheit 2.1 unter Zugriff auf das erste Sicherheitsmodul 2.3 in einem Schritt 5.18 den geheimen Sitzungsschlüssel SK nach dem Diffie-Hellman Key Agreement und gibt diesen gleichzeitig zur Nutzung frei.

Die Freigabe erfolgt im vorliegenden Beispiel einfach dadurch, dass der geheime Sitzungsschlüssel SK generiert und in einen entsprechend zugänglichen Speicherbereich des ersten Sicherheitsmoduls 2.3 geschrieben wird. Es versteht sich jedoch, das bei anderen Varianten der Erfindung auch vorgesehen sein kann, dass der geheime Sitzungsschlüssel SK in jedem Fall generiert wird, aber erst bei positivem Ergebnis der Überprüfungen und Verifizierung durch entsprechendes Setzen eines Flags oder dergleichen freigegeben wird.

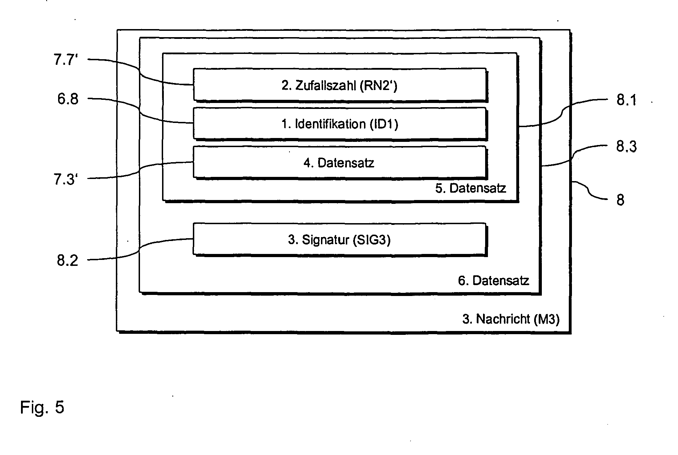

In einem Schritt 5.19 generiert die erste Verarbeitungseinheit 2.1 eine dritte Nachricht 8 (M3), wie sie in Figur 5 schematisch dargestellt ist. Diese dritte Nachricht 8 umfasst einen von der ersten Verarbeitungseinheit 2.1 generierten fünften Datensatz 8.1 und eine dritte digitale Signatur 8.2 (SIG3), die von der ersten Verarbeitungseinheit 2.1 in einem sechsten Datensatz 8.3 zusammengefasst wurden.

Der fünfte Datensatz 8.1 umfasst dabei die zuletzt mit der zweiten Nachricht 7 (M2) übermittelte zweite Zufallszahl 7.7' (RN2'), die hierzu unverändert übernommen wird. Er umfasst weiterhin die der Frankiermaschine 2 zugeordnete erste Identifikation 6.8 (ID1), anhand derer die Frankiermaschine 2 eindeutig identifiziert werden kann. Schließlich umfasst der dritte Datensatz 8.1 nochmals den vierten Datensatz 7.3', der hierzu ebenfalls unverändert übernommen wird.

In dem Schritt 5.19 erstellt die erste Verarbeitungseinheit 2.1 unter Zugriff auf das erste Sicherheitsmodul 3.3 über dem fünften Datensatz 8.1 eine dritte digitale Signatur 8.2 (SIG3) nach einem bekannten Signaturalgorithmus, beispielweise RSA, DSA, EIGamal, ECDSA etc. Vorzugsweise handelt es sich dabei um denselben Algorithmus, der für die Erstellung der ersten digitalen Signatur 6.2 (SIG1) verwendet wurde. Auch hier versteht es sich, dass bei anderen Varianten des erfindungsgemäßen Verfahrens auch nur über einen Teil des fünften Datensatzes die dritte digitale Signatur (SIG3) erstellt werden kann. Um die dritte digitale Signatur 8.2 (SIG3) zu erzeugen, greift die erste Verarbeitungseinheit 2.1 wiederum auf den in dem ersten Sicherheitsmodul 2.3 gespeicherten ersten Signaturschlüssel zu.

Die erste Verarbeitungseinheit 3.1 generiert im Schritt 5.19 aus dem fünften Datensatz 8.1 und der dritten digitalen Signatur 8.2 (SIG3) den sechsten Datensatz 8.3. Dieser wird in die dritte Nachricht 8 (M3) eingebracht, die in einem Schritt 5.20 über das Kommunikationsnetz 4 an die Datenzentrale 3 (P2) übermittelt wird.

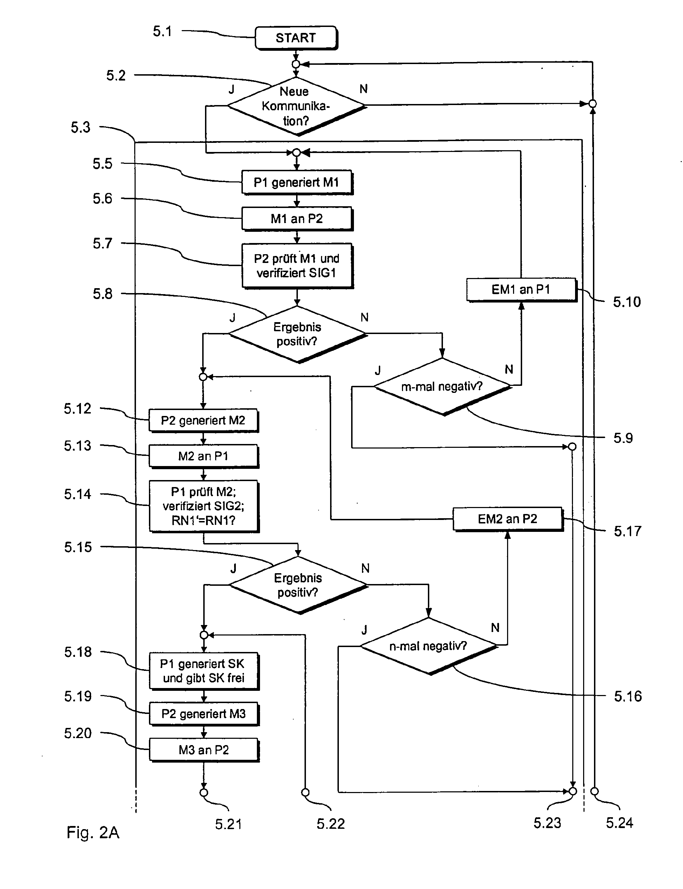

Wie Figur 2B - deren Anschlusspunkte zu Figur 2A mit 5.21 bis 5.24 bezeichnet sind - zu entnehmen ist, überprüft die Datenzentrale 3 in einem Schritt 5.25 den Inhalt der dritten Nachricht 8 (M2), insbesondere den Inhalt des sechsten Datensatzes 8.3, nach wenigstens einem vorgegebenen dritten Prüfungskriterium, das dem ersten Prüfungskriterium entspricht.

Zusätzlich zu der Überprüfung verifiziert die Datenzentrale 3 in dem Schritt 5.25 die dritte digitale Signatur 8.2 (SIG3). Hierzu identifiziert die zweite Verarbeitungseinheit 3.1 anhand der mit der dritten Nachricht 8 (M3) übermittelten ersten Identifikation 6.8 (ID1) den zugehörigen ersten Verifizierungsschlüssel und greift auf den in dem zweiten Sicherheitsmodul 3.3 gespeicherten entsprechenden zweiten Verifizierungsschlüssel zu.

Anhand des rückübermittelten vierten Datensatzes 6.3' kann die Datenzentrale 3 zudem überprüfen, ob die Frankiermaschine 2 alle zuvor in dem Schritt 5.13 übersandten Daten fehlerfrei erhalten hat.

Schließlich wird in dem Schritt 5.25 überprüft, ob die rückübermittelte zweite Zufallszahl 7.7' (RN2') gleich der in dem zweiten Speicher 3.4 gespeicherten zweiten Zufallszahl 7.7 (RN2) ist. Ist dies der Fall, kann in einfacher Weise ausgeschlossen werden, dass eine Replay-Attacke durch Einspielen einer aufgezeichneten alten dritten Nachricht vorliegt. Die dritte Signatur 8.2 (SIG3), die unter anderem über der rückübermittelten zweiten Zufallszahl 7.7' (RN2') erstellt wurde, gewährleistet dabei die Authentizität der rückübermittelten zweiten Zufallszahl 7.7'. Unerkannten Manipulationen durch einfaches Einsetzen einer aktuell abgefangenen zweiten Zufallszahl 7.7 in eine aufgezeichnete alte zweite Nachricht ist damit vorgebeugt.

In einem Schritt 5.26 wird überprüft, ob das jeweilige Ergebnis der Überprüfung bzw. Verifizierung in Schritt 5.25 positiv war, d.h. ob das dritte Prüfungskriterium erfüllt wurde, die Verifizierung erfolgreich abgeschlossen wurde bzw. die rückübermittelte zweite Zufallszahl 7.7' (RN2') gleich der gespeicherten zweiten Zufallszahl 7.7 (RN2) ist.

Ist das Ergebnis einer der Überprüfungen und/oder der Verifizierung negativ, d.h. wird festgestellt, dass das dritte Prüfungskriterium nicht erfüllt wird und/oder die Verifizierung fehlgeschlagen ist und/oder die rückübermittelte zweite Zufallszahl 7.7' (RN2') ungleich der gespeicherten zweiten Zufallszahl 6.7 (RN1) ist, reagiert die Datenzentrale 3 entsprechend.

Zunächst wird in einem Schritt 5.27 überprüft, ob bereits eine vorgebbare Zahl von o negativen Ergebnissen in Folge vortiegt. Ist dies nicht der Fall, wird in einem Schritt 5.28 eine entsprechende dritte Fehlermeldung (EM3) an die Frankiermaschine 2 übermittelt und es wird zurück zu Schritt 5.18 gesprungen. Liegen jedoch bereits n negative Ergebnisse in Folge vor, wird zum Schritt 5.11 gesprungen und die Datenzentrale 3 bricht die Kommunikation mit der Frankiermaschine 2 ab.

Ist das Ergebnis der Überprüfung und der Verifizierung in Schritt 5.7 positiv, d.h. wird festgestellt, dass das dritte Prüfungskriterium erfüllt wird, die Verifizierung erfolgreich war und die rückübermittelte zweite Zufallszahl 7.7' (RN2') gleich der gespeicherten zweiten Zufallszahl 7.7 (RN2) ist, generiert die zweite Verarbeitungseinheit 3.1 unter Zugriff auf das zweite Sicherheitsmodul 3.3 in einem Schritt 5.29 den geheimen Sitzungsschlüssel SK nach dem Diffie-Hellman Key Agreement und gibt diesen gleichzeitig zur Nutzung frei. Hierbei verfährt sie analog zur Generierung und Freigabe des geheimen Sitzungsschlüssels SK durch die erste Verarbeitungseinheit 2.1.

Beide Kommunikationspartner (P1 und P2) sind nunmehr im Besitz des geheimen Sitzungsschlüssels SK und können unter dessen Verwendung in dem zweiten Kommunikationsschritt 5.4 eine abgesicherte Kommunikation führen. Hierzu werden die auszutauschenden Nachrichten jeweils unter Verwendung des geheimen Sitzungsschlüssels SK nach einem bekannten symmetrischen Verschlüsselungsalgorithmus, z.B. DES, verschlüsselt. Die auszutauschenden Nachrichten sind somit für Dritte, die nicht im Besitz des geheimen Sitzungsschlüssels SK nicht interpretierbar.

Wurden beispielsweise sämtliche von der Frankiermaschine 2 angeforderten Dienste von der Datenzentrale 3 durchgeführt, wird in dem Schritt 5.11 die Kommunikation zwischen der Frankiermaschine 2 und der Datenzentrale 3 beendet.

In einem Schritt 5.30 wird schließlich überprüft, ob der Verfahrensablauf beendet werden soll. Ist dies der Fall, endet der Verfahrensablauf in einem Schritt 5.31. Andernfalls wird zu dem Schritt 5.2 zurück gesprungen.

Die vorliegende Erfindung wurde vorstehend anhand eines Beispiels aus dem Bereich der Frankiermaschinen beschrieben, bei dem die Frankiermaschine den ersten Kommunikationspartner P1 und die Datenzentrale den zweiten Kommunikationspartner P2 darstellt. Es versteht sich jedoch, dass die Rollen bei anderen Varianten der Erfindung auch vertauscht sein können, d.h. dass die Datenzentrale den ersten Kommunikationspartner P1 und die Frankiermaschine den zweiten Kommunikationspartner P2 darstellt.

Die vorliegende Erfindung wurde vorstehend anhand eines Beispiels aus dem Bereich der Frankiermaschinen beschrieben. Es versteht sich jedoch, dass sie auch im Bereich der Kommunikation zwischen andersartigen Datenverarbeitungseinrichtungen eingesetzt werden kann, bei denen eine Absicherung der Kommunikation vor unbefugtem Zugriff Dritter erfolgen soll.

## Patentansprüche

1. Verfahren zum Generieren eines geheimen Sitzungsschlüssels für die kryptographische Absicherung eines Kommunikationskanals zwischen einem ersten Kommunikationspartner (2) und einem zweiten Kommunikationspartner (3), bei dem der erste Kommunikationspartner (2)
- wenigstens einen ersten Schlüsselparameter (6.5) generiert,
- wenigstens einen von dem zweiten Kommunikationspartner (3) generierten zweiten Schlüsselparameter (7.5) erhält, und
- den geheimen Sitzungsschlüssel unter Verwendung des ersten Schlüsselparameters (6.5) und des zweiten Schlüsselparameters (7.5) generiert,
**dadurch gekennzeichnet, dass** der erste Kommunikationspartner (2)
- eine erste Zufallszahl (6.7) generiert, speichert und an den zweiten Kommunikationspartner (3) übermittelt,
- eine von dem zweiten Kommunikationspartner (3) rückübermittelte erste Zufallszahl (6.7')erhält,
- die rückübermittelte erste Zufallszahl (6.7') mit der gespeicherten ersten Zufallszahl (6.7) vergleicht und den generierten geheimen Sitzungsschlüssel bei Vorliegen einer vorgebbaren ersten Beziehung zwischen der rückübermittelten ersten Zufallszahl (6.7') und der gespeicherten ersten Zufallszahl (6.7) zur Verwendung freigibt.

2. Verfahren nach Anspruch 1, **dadurch gekennzeichnet, dass** der erste Kommunikationspartner (2) den ersten Schlüsselparameter (6.5) an den zweiten Kommunikationspartner (3) übermittelt und der zweite Kommunikationspartner (3) den geheimen Sitzungsschlüssel unter Verwendung des ersten Schlüsselparameters (6.5) und des zweiten Schlüsselparameters (7.5) generiert.

3. Verfahren nach Anspruch 2, **dadurch gekennzeichnet, dass** der zweite Kommunikationspartner (3)
- eine zweite Zufallszahl (7.7) generiert, speichert und an den ersten Kommunikationspartner (2) übermittelt,
- eine von dem ersten Kommunikationspartner (2) rückübermittelte zweite Zufallszahl (7.7') erhält,
- die rückübermittelte zweite Zufallszahl (7.7') mit der gespeicherten zweiten Zufallszahl (7.7) vergleicht und den generierten geheimen Sitzungsschlüssel bei Vorliegen einer vorgebbaren zweiten Beziehung zwischen der rückübermittelten zweiten Zufallszahl (7.7') und der gespeicherten zweiten Zufallszahl (7.7) zur Verwendung freigibt.

4. Verfahren nach einem der vorhergehenden Ansprüche, **dadurch gekennzeichnet, dass** der erste Kommunikationspartner (2) einen ersten Datensatz (6.1) generiert und an den zweiten Kommunikationspartner (3) übermittelt, wobei der erste Datensatz (6.1)
- die erste Zufallszahl (6.7) umfasst und
- einen ersten Schlüsselgenerierungsdatensatz (6.4) umfasst und/oder
- eine erste Identifikation (6.8) des ersten Kommunikationspartners (2) umfasst.

5. Verfahren nach Anspruch 4, **dadurch gekennzeichnet, dass** der erste Schlüsselgenerierungsdatensatz (6.4)
- wenigstens den ersten Schlüsselparameter (6.5) umfasst und/oder
- wenigstens einen ersten Schlüsselgenerierungsparameter (6.6) umfasst.

6. Verfahren nach Anspruch 4 oder 5, **dadurch gekennzeichnet, dass** der erste Kommunikationspartner (2)
- eine erste digitale Signatur (6.2) über wenigstens einen Teil des ersten Datensatzes (6.1) generiert und
- einen zweiten Datensatz (6.3) generiert und an den zweiten Kommunikationspartner (3) übermittelt, wobei der zweite Datensatz (6.3) wenigstens die erste digitale Signatur (6.2), insbesondere wenigstens die erste digitale Signatur (6.2) und den ersten Datensatz (6.1), umfasst.

7. Verfahren nach Anspruch 6, **dadurch gekennzeichnet, dass** der zweite Kommunikationspartner (3)
- den Inhalt des zweiten Datensatzes (6.3) nach wenigstens einem vorgegebenen ersten Prüfungskriterium überprüft, wobei insbesondere das erste Prüfungskriterium in dem zweiten Datensatz (6.3) enthalten ist, und in Abhängigkeit von dem Ergebnis der Überprüfung weiterverfährt
und/oder
- die erste digitale Signatur (6.2) verifiziert und in Abhängigkeit von dem Ergebnis der Verifizierung weiterverfährt.

8. Verfahren nach einem der Ansprüche 4 bis 7, **dadurch gekennzeichnet, dass** der zweite Kommunikationspartner (3) nach Erhalt des ersten Datensatzes (6.1) einen dritten Datensatz (7.1) generiert und an den ersten Kommunikationspartner (2) übermittelt, wobei der dritte Datensatz (7.1)
- die von dem ersten Kommunikationspartner (2) zuletzt erhaltene erste Zufallszahl (6.7') umfasst und
- eine zweite Zufallszahl (7.7) umfasst und
- einen zweiten Schlüsselgenerierungsdatensatz (7.4) umfasst, der insbesondere wenigstens den zweiten Schlüsselparameter (7.5) umfasst, und/oder
- eine zweite Identifikation (7.7) des zweiten Kommunikationspartners umfasst und/oder
- wenigstens einen Teil des zweiten Datensatzes (6.3') umfasst.

9. Verfahren nach Anspruch 8, **dadurch gekennzeichnet, dass** der zweite Schlüsselgenerierungsdatensatz (7.4)
- wenigstens den zweiten Schlüsselparameter (7.5) umfasst und/oder
- wenigstens einen zweiten Schlüsselgenerierungsparameter umfasst.

10. Verfahren nach Anspruch 8 oder 9, **dadurch gekennzeichnet, dass** der zweite Kommunikationspartner (3)
- eine zweite digitale Signatur (7.2) über wenigstens einen Teil des dritten Datensatzes (7.1) generiert und
- einen vierten Datensatz (7.3) generiert und an den ersten Kommunikationspartner (2) übermittelt, wobei der vierte Datensatz (7.3) wenigstens die zweite digitale Signatur (7.2), insbesondere wenigstens die zweite digitale Signatur (7.2) und den dritten Datensatz (7.1), umfasst.

11. Verfahren nach Anspruch 10, **dadurch gekennzeichnet, dass** der erste Kommunikationspartner (2)
- den Inhalt des vierten Datensatzes (7.3) nach wenigstens einem vorgegebenen zweiten Prüfungskriterium überprüft, wobei insbesondere das zweite Prüfungskriterium in dem vierten Datensatz (7.3) enthalten ist, und in Abhängigkeit von dem Ergebnis der Überprüfung weiterverfährt
und/oder
- die zweite digitale Signatur (7.2) verifiziert und in Abhängigkeit von dem Ergebnis der Verifizierung weiterverfährt.

12. Verfahren nach einem der Ansprüche 8 bis 11, **dadurch gekennzeichnet, dass** der erste Kommunikationspartner (2) nach Erhalt des dritten Datensatzes (7.1) einen fünften Datensatz (8.1) generiert und an den zweiten Kommunikationspartner (3) übermittelt, wobei der fünfte Datensatz (8.1)
- die von dem zweiten Kommunikationspartner (3) zuletzt erhaltene zweite Zufallszahl (7.7') und
- eine erste Identifikation (6.8) des ersten Kommunikationspartners (2) umfasst und/oder
- wenigstens einen Teil des zweiten Datensatzes umfasst und/oder
- wenigstens einen Teil des vierten Datensatzes (7.3') umfasst.

13. Verfahren nach Anspruch 12, **dadurch gekennzeichnet, dass** der erste Kommunikationspartner (2)
- eine dritte digitale Signatur (8.2) über wenigstens einen Teil des fünften Datensatzes (8.1) generiert und
- einen sechsten Datensatz (8.3) generiert und an den zweiten Kommunikationspartner (3) übermittelt, wobei der sechste Datensatz (8.3) wenigstens die dritte digitale Signatur (8.2), insbesondere wenigstens die dritte digitale Signatur (8.2) und den fünften Datensatz (8.1), umfasst.

14. Verfahren nach Anspruch 13, **dadurch gekennzeichnet, dass** der zweite Kommunikationspartner (3)
- den Inhalt des sechsten Datensatzes (8.3) nach wenigstens einem vorgegebenen dritten Prüfungskriterium überprüft, wobei insbesondere das dritte Prüfungskriterium in dem sechsten Datensatz (8.3) enthalten ist, und in Abhängigkeit von dem Ergebnis der Überprüfung weiterverfährt
und/oder
- die dritte digitale Signatur (8.2) verifiziert und in Abhängigkeit von dem Ergebnis der Verifizierung weiterverfährt.

15. Verfahren zur sicheren Kommunikation zwischen einem ersten Kommunikationspartner (2) und einem zweiten Kommunikationspartner (3), bei dem in einem ersten Kommunikationsschritt (5.3) ein geheimer Sitzungsschlüssel mit einem Verfahren nach einem der vorhergehenden Ansprüche generiert wird und in einem dem ersten Kommunikationsschritt nachfolgenden zweiten Kommunikationsschritt (5.4) eine Kommunikationssitzung zwischen dem ersten Kommunikationspartner (2) und dem zweiten Kommunikationspartner (3) unter Verwendung des geheimen Sitzungsschlüssel kryptographisch abgesichert wird.

16. Anordnung zum Generieren eines geheimen Sitzungsschlüssels für die kryptographische Absicherung eines Kommunikationskanals zwischen einer ersten Datenverarbeitungseinrichtung (2) und einer zweiten Datenverarbeitungseinrichtung (3), mit einer ersten Datenverarbeitungseinrichtung (2), die
- eine erste Verarbeitungseinheit (2.1) aufweist, die zum Generieren wenigstens eines ersten Schlüsselparameters (6.5) ausgebildet ist,
- eine mit der ersten Verarbeitungseinheit (2.1) verbundene erste Kommunikationseinheit (2.2) aufweist, die zum Empfangen wenigstens eines von dem zweiten Kommunikationspartner (3) generierten zweiten Schlüsselparameters (7.5) ausgebildet ist, wobei
- die erste Verarbeitungseinheit (2.1) zum Generieren des geheimen Sitzungsschlüssels unter Verwendung des ersten Schlüsselparameters (6.5) und des zweiten Schlüsselparameters (7.5) ausgebildet ist,
**dadurch gekennzeichnet, dass**
- die erste Verarbeitungseinheit (2.1) zum Generieren einer ersten Zufallszahl (6.7) ausgebildet ist,
- die erste Datenverarbeitungseinrichtung (2) einen mit der ersten Verarbeitungseinheit (2.1) verbundenen ersten Speicher (2.4) zum Speichern der ersten Zufallszahl (6.7) aufweist,
- die erste Verarbeitungseinheit (2.1) zum Übermitteln der ersten Zufallszahl (6.7) an die zweite Datenverarbeitungseinrichtung (3) über die erste Kommunikationseinheit (2.2) ausgebildet ist,
- die erste Verarbeitungseinheit (2.1) zum Empfangen einer von der zweiten Datenverarbeitungseinrichtung (3) rückübermittelten ersten Zufallszahl (6.7') über die erste Kommunikationseinheit (2.2) ausgebildet ist,
- die erste Verarbeitungseinheit (2.1) zum Vergleichen der rückübermittelten ersten Zufallszahl (6.7') mit der in dem ersten Speicher (2.4) gespeicherten ersten Zufallszahl (6.7) und zur Freigabe der Verwendung des geheimen Sitzungsschlüssels bei Vorliegen einer vorgebbaren ersten Beziehung zwischen der rückübermittelten ersten Zufallszahl (6.7') und der gespeicherten ersten Zufallszahl (6.7) ausgebildet ist.

17. Anordnung nach Anspruch 16, **gekennzeichnet durch** eine zweite Datenverarbeitungseinrichtung (3), wobei
- die zweite Datenverarbeitungseinrichtung (3) eine zweite Verarbeitungseinheit (3.1) und eine mit der zweiten Verarbeitungseinheit (3.1) verbundene zweite Kommunikationseinheit (3.2) aufweist,
- die zweite Verarbeitungseinheit (3.1) zum Generieren des zweiten Schlüsselparameters (7.5) ausgebildet ist, .
- die erste Datenverarbeitungseinrichtung (2) zum Übermitteln des ersten Schlüsselparameters (6.5) über die zweite Kommunikationseinheit (3.2) an die zweite Verarbeitungseinheit (3.1) ausgebildet ist und
- die zweite Verarbeitungseinheit (3.1) zum Generieren des geheimen Sitzungsschlüssels unter Verwendung des ersten Schlüsselparameters (6.5) und des zweiten Schlüsselparameters (7.5) ausgebildet ist.

18. Anordnung nach Anspruch 17, **dadurch gekennzeichnet, dass**
- die zweite Verarbeitungseinheit (3.1) zum Generieren einer zweiten Zufallszahl (7.7) ausgebildet ist,
- die zweite Datenverarbeitungseinrichtung (3) einen mit der zweiten Verarbeitungseinheit (3.1) verbundenen zweiten Speicher (3.4) zum Speichern der zweiten Zufallszahl (7.7) aufweist,
- die zweite Verarbeitungseinheit (3.1) zum Übermitteln der zweiten Zufallszahl (7.7) an die erste Datenverarbeitungseinrichtung (2) über die zweite Kommunikationseinheit (3.2) ausgebildet ist,
- die zweite Verarbeitungseinheit (3.1) zum Empfangen einer von der ersten Datenverarbeitungseinrichtung (2) über die zweite Kommunikationseinheit (3.2) rückübermittelten zweiten Zufallszahl (7.7') ausgebildet ist,
- die zweite Verarbeitungseinheit (3.1) zum Vergleichen der rückübermittelten zweiten Zufallszahl (7.7') mit der in dem zweiten Speicher (3.4) gespeicherten zweiten Zufallszahl (7.7) und zur Freigabe der Verwendung des geheimen Sitzungsschlüssels bei Vorliegen einer vorgebbaren zweiten Beziehung zwischen der rückübermittelten zweiten Zufallszahl (7.7') und der gespeicherten zweiten Zufallszahl (7.7) ausgebildet ist.

19. Anordnung nach einem der Ansprüche 16 bis 18, **dadurch gekennzeichnet, dass** die erste Verarbeitungseinheit (2.1) zum Generieren und Übermitteln eines ersten Datensatzes (6.1) an die zweite Datenverarbeitungseinrichtung (3) ausgebildet ist, wobei der erste Datensatz (6.1)
- die erste Zufallszahl (6.7) umfasst und
- einen ersten Schlüsselgenerierungsdatensatz (6.4) umfasst und/oder
- eine der ersten Datenverarbeitungseinrichtung (2) zugeordnete erste Identifikation (6.8) umfasst.

20. Anordnung nach Anspruch 19, **dadurch gekennzeichnet, dass** der erste Schlüsselgenerierungsdatensatz (6.4)
- wenigstens den ersten Schlüsselparameter (6.5) umfasst und/oder
- wenigstens einen ersten Schlüsselgenerierungsparameter umfasst (6.6).

21. Anordnung nach Anspruch 19 oder 20, **dadurch gekennzeichnet, dass** die erste Verarbeitungseinheit (2.1)
- zum Generieren einer ersten digitalen Signatur (6.2) über wenigstens einen Teil des ersten Datensatzes (6.1) ausgebildet ist und
- zum Generieren und Übermitteln eines zweiten Datensatzes (6.3) an die zweite Datenverarbeitungseinrichtung (3) ausgebildet ist, wobei der zweite Datensatz (6.3) wenigstens die erste digitale Signatur (6.2), insbesondere wenigstens die erste digitale Signatur (6.2) und den ersten Datensatz (6.1), umfasst.

22. Anordnung nach Anspruch 21, **dadurch gekennzeichnet, dass** die zweite Verarbeitungseinheit (3.1)
- zum Überprüfen des Inhalts des zweiten Datensatzes (6.3) nach wenigstens einem vorgegebenen ersten Prüfungskriterium, das insbesondere in dem zweiten Datensatz (6.3) enthalten ist, und zum Betrieb in Abhängigkeit von dem Ergebnis der Überprüfung ausgebildet ist
und/oder
- zum Verifizieren der ersten digitalen Signatur (6.2) und zum Betrieb in Abhängigkeit von dem Ergebnis der Verifizierung ausgebildet ist.

23. Anordnung nach einem der Ansprüche 19 bis 22, **dadurch gekennzeichnet, dass** die zweite Verarbeitungseinheit (3.1) zum Generieren und Übermitteln eines dritten Datensatzes (7.1) an die erste Datenverarbeitungseinrichtung (2) nach Erhalt des ersten Datensatzes (6.1) ausgebildet ist, wobei der dritte Datensatz (7.1)
- die von der ersten Datenverarbeitungseinrichtung (2) zuletzt erhaltene erste Zufallszahl (6.7') umfasst und
- eine zweite Zufallszahl (7.7) umfasst und
- einen zweiten Schlüsselgenerierungsdatensatz (7.4) umfasst, der insbesondere wenigstens den zweiten Schlüsselparameter (7.5) umfasst, und/oder
- eine der zweiten Datenverarbeitungseinrichtung (3) zugeordnete zweite Identifikation (7.8) umfasst und/oder
- wenigstens einen Teil des zweiten Datensatzes (6.3') umfasst.

24. Anordnung nach Anspruch 19 oder 20, **dadurch gekennzeichnet, dass** die zweite Verarbeitungseinheit (3.1)
- zum Generieren einer zweiten digitalen Signatur (7.2) über wenigstens einen Teil des dritten Datensatzes (7.1) ausgebildet ist und
- zum Generieren und Übermitteln eines vierten Datensatzes (7.3) an die erste Datenverarbeitungseinrichtung (2) ausgebildet ist, wobei der vierte Datensatz (7.3) wenigstens die zweite digitale Signatur (7.2), insbesondere wenigstens die zweite digitale Signatur (7.2) und den dritten Datensatz (7.1), umfasst.

25. Anordnung nach Anspruch 24, **dadurch gekennzeichnet, dass** die erste Verarbeitungseinheit (2.1)
- zum Überprüfen des Inhalts des vierten Datensatzes (7.3) nach wenigstens einem vorgegebenen zweiten Prüfungskriterium, das insbesondere in dem vierten Datensatz (7.3) enthalten ist, und zum Betrieb in Abhängigkeit von dem Ergebnis der Überprüfung ausgebildet ist
und/oder
- zum Verifizieren der zweiten digitalen Signatur (7.2) und zum Betrieb in Abhängigkeit von dem Ergebnis der Verifizierung ausgebildet ist.

26. Anordnung nach einem der Ansprüche 23 bis 25, **dadurch gekennzeichnet, dass** die erste Verarbeitungseinheit (2.1) zum Generieren und Übermitteln eines fünften Datensatzes (8.1) an die zweite Datenverarbeitungseinrichtung (3) nach Erhalt des dritten Datensatzes (7.1) ausgebildet ist, wobei der fünfte Datensatz (8.1)
- die von der zweiten Datenverarbeitungseinrichtung (3) zuletzt erhaltene zweite Zufallszahl (7.7') und
- eine der ersten Datenverarbeitungseinrichtung (2) zugeordnete erste Identifikation (6.8) des ersten Kommunikationspartners (2) umfasst und/oder.
- wenigstens einen Teil des zweiten Datensatzes umfasst und/oder.
- wenigstens einen Teil des vierten Datensatzes (7.3') umfasst

27. Anordnung nach Anspruch 26, **dadurch gekennzeichnet, dass** die erste Verarbeitungseinheit (2.1)
- zum Generieren einer dritten digitalen Signatur (8.2) über wenigstens einen Teil des fünften Datensatzes (8.1) ausgebildet ist und
- zum Generieren und Übermitteln eines sechsten Datensatzes (8.3) an die zweite Datenverarbeitungseinrichtung (3) ausgebildet ist, wobei der sechste Datensatz (8.3) wenigstens die dritte digitale Signatur (8.2), insbesondere wenigstens die dritte digitale Signatur (8.2) und den fünften Datensatz (8.1), umfasst.

28. Anordnung nach Anspruch 27, **dadurch gekennzeichnet, dass** die zweite Verarbeitungseinheit (3.2)
- zum Überprüfen des Inhalt des sechsten Datensatzes (8.3) nach wenigstens einem vorgegebenen dritten Prüfungskriterium, das insbesondere in dem sechsten Datensatz (8.3) enthalten ist, und zum Betrieb in Abhängigkeit von dem Ergebnis der Überprüfung ausgebildet ist
und/oder
- zum Verifizieren der dritten digitalen Signatur (8.2) und zum Betrieb in Abhängigkeit von dem Ergebnis der Verifizierung ausgebildet ist.

29. Anordnung nach einem der Ansprüche 16 bis 28, **dadurch gekennzeichnet, dass** die erste Verarbeitungseinheit (2.1) zum Verschlüsseln von Nachrichten an die zweite Datenverarbeitungseinrichtung (3) unter Verwendung des freigegebenen geheimen Sitzungsschlüssels ausgebildet ist.

30. Anordnung nach einem der Ansprüche 16 bis 29, **dadurch gekennzeichnet, dass** die zweite Datenverarbeitungseinrichtung (3) eine erste Verarbeitungseinheit (3.1) aufweist, die zum Verschlüsseln von Nachrichten an die zweite Datenverarbeitungseinrichtung (2) unter Verwendung des freigegebenen geheimen Sitzungsschlüssels ausgebildet ist.

31. Anordnung nach einem der Ansprüche 16 bis 30, **dadurch gekennzeichnet, dass**
- die erste Datenverarbeitungseinrichtung (2) als Frankiermaschine ausgebildet ist, wobei insbesondere die zweite Datenverarbeitungseinrichtung (3) als entfernt von der ersten Datenverarbeitungseinrichtung (2) angeordnete Datenzentrale ausgebildet ist,
oder
- die zweite Datenverarbeitungseinrichtung als Frankiermaschine ausgebildet ist, wobei insbesondere die erste Datenverarbeitungseinrichtung als entfernt von der zweiten Datenverarbeitungseinrichtung angeordnete Datenzentrale ausgebildet ist.

32. Datenverarbeitungseinrichtung, **dadurch gekennzeichnet, dass** sie als erste Datenverarbeitungseinrichtung (2) oder als zweite Datenverarbeitungseinrichtung (3) für eine Anordnung nach einem der Ansprüche 16 bis 31 ausgebildet ist.
